# EUROPÄISCHE PATENTSCHRIFT

(11) **EP 0 587 084 B1**
(45) Veröffentlichungstag und Bekanntmachung des Hinweises auf die Patenterteilung: **19.07.1995**
(21) Anmeldenummer: 93114252.5
(22) Anmeldetag: 06.09.1993
(51) Int. Cl.: B61C 9/46, B60B 17/00

(54) **Einzelrad mit Radnabenmotor für Schienenfahrzeuge**
Single wheel with wheel hub motor for railway vehicles
Roue indépendante avec moteur au moyeu de roue pour véhicules ferroviaires

(30) Priorität: 09.09.1992 DE 4230137
(43) Veröffentlichungstag der Anmeldung: 16.03.1994
(73) Patentinhaber: ABB HENSCHEL WAGGON UNION GmbH, D-13509 Berlin (DE)
(72) Erfinder: Elsner, Helmut, Dr., D-12163 Berlin (DE); Kühnel, Arne, Dr., D-12203 Berlin (DE); Veit-Salomon, Emil, D-10625 Berlin (DE)
(74) Vertreter: Rupprecht, Klaus, Dipl.-Ing.

(56) Entgegenhaltungen:
- EP-A- 0 464 929
- DE-A- 2 341 008
- PATENT ABSTRACTS OF JAPAN vol. 12, no. 67 (M-678)(2914) 2. März 1988 & JP-A-62 214 001 (SUMITOMO METAL IND LTD.) 19. September 1987

## Beschreibung

Die Erfindung betrifft ein Einzelrad mit Radnabenmotor für Schienenfahrzeuge, wobei der Radnabenmotor entweder direkt oder unter Zwischenschaltung eines Getriebes das Einzelrad antreibt und die aus Motor und Getriebe oder dem Motor gebildete Antriebseinheit in das Einzelrad integriert ist.

Gummigefederte Räder für Schienenfahrzeuge sind in den unterschiedlichsten Konstruktionen seit Jahren bekannt. Diese gummigefederten Räder basieren auf Anforderungen, die sich im wesentlichen aus dem Befahren enger Kurven und von Streckennetzen mit hohem Anteil an Rillenschienen ergeben. Mit der fortschreitenden Modernisierung der Schienenfahrzeuge und den sich ständig erhöhenden Lasten und Geschwindigkeiten werden durch die gummigefederten Räder erhebliche Verbesserungen des Fahrkomforts und die Ausschaltung hochfrequenter Kurvenkreischgeräusche erzielt. Darüber hinaus bewirken gummigefederte Räder eine weitreichende Schonung des Oberbaumaterials, der Laufwerke und insbesondere der Aufbauteile der Radsätze.

Durch die DE-OS 40 40 303 sind auch Einzelradfahrwerke für Schienenfahrzeuge bekannt, bei denen in dem angetriebenen Einzelrad in einem Lagergehäuse Antriebsmotor, Getriebe und Bremsscheibe integriert sind. Der Radreifen dieses Einzelradfahrwerks ist dabei über eine elastische Zwischenlage auf einem Lagergehäuse fest gelagert und mit dem Lagergehäuse auf der Achswelle drehbar angeordnet.

Das Ziel einer derartigen Konstruktion ist eine möglichst wirtschaftliche Anordnung sämtlicher Fahrwerkskomponenten, die überdies räumlich beengt im Bereich des Rades angeordnet sein muß. Nachteilig bei dieser Ausführung ist jedoch die hohe Wärmeabstrahlung der Antriebseinheit, die sich nachteilig auf die elastische Zwischenlage auswirkt. Die elastische Zwischenlage besteht aus Naturkautschuk und ist für eine maximale Betriebstemperatur von ca. 80°C geeignet. Bei dieser Temperatur ist für den vorgesehenen Verwendungszweck die Kriechfestigkeitsgrenze des Naturkautschuks erreicht. Die Bauteile, die mit der elastischen Zwischenlage in Berührung kommen, dürfen daher keine höheren Temperaturen erreichen. Moderne Antriebsmotoren mit hoher Leistungsdichte oder hohen Drehmomenten erreichen jedoch wesentlich höhere Betriebstemperaturen.

Die Aufgabe vorliegender Erfindung bestand nun darin, eine elastische Aufhängung des Radreifens gegenüber der Antriebseinheit zu finden, die gegen die im Fahrbetrieb auftretenden Betriebstemperaturen der Antriebseinheit und gegen die wärmeabstrahlung der Antriebseinheit unempfindlich ist.

Diese Aufgabe wird gemäß der Erfindung dadurch gelöst, daß der Radreifen des Einzelrades direkt auf der Mantelfläche der Antriebseinheit unter Zwischenschaltung einer elastischen Zwischenlage und einer thermisch isolierenden Zwischenlage drehfest angeordnet ist. Die thermisch isolierende Zwischenlage ist dabei direkt auf dem Gehäuse der Antriebseinheit angeordnet und dort form-, kraft- oder stoffschlüssig befestigt. Die thermisch isolierende Zwischenlage ist weiter direkt unter der elastischen Zwischenlage angeordnet und mit dieser form- und kraftschlüssig verbunden. Gemäß der Erfindung ist weiter die thermisch isolierende Zwischenlage ringförmig ausgebildet.

Gemäß einer zweckmäßigen Ausgestaltung der Erfindung ist die thermisch isolierende Zwischenlage als ein in Querrichtung geteilter Ring ausgebildet, der seitlich gegen die elastische Zwischenlage abgestützt ist. Gemäß einem weiteren zweckmäßigen Ausführungsbeispiel der Erfindung sind die thermisch isolierende Zwischenlage und die elastische Zwischenlage in Umfangsrichtung geteilt.

Gemäß einer bevorzugten Ausführung der Erfindung sind die Zwischenlagen über seitlich gegen diese anliegenden Felgenringe gegeneinander und über einen Steg auf der Mantelfläche der Antriebseinheit gegen diese verspannt.

Vorteilhaft wird durch die Erfindung eine Möglichkeit geschaffen, Einzelräder für Schienenfahrzeuge mit in das Einzelrad integrierter Antriebseinheit mit einer elastischen Zwischenlage zwischen Radreifen und Antriebseinheit zu versehen, die auf kleinstem Raum einbaubar ist und bei der die elastische Zwischenlage gegenüber der Antriebseinheit thermisch isoliert gelagert ist.

Einzelheiten der Erfindung sind an Hand von Ausführungsbeispielen in der Zeichnung erläutert.

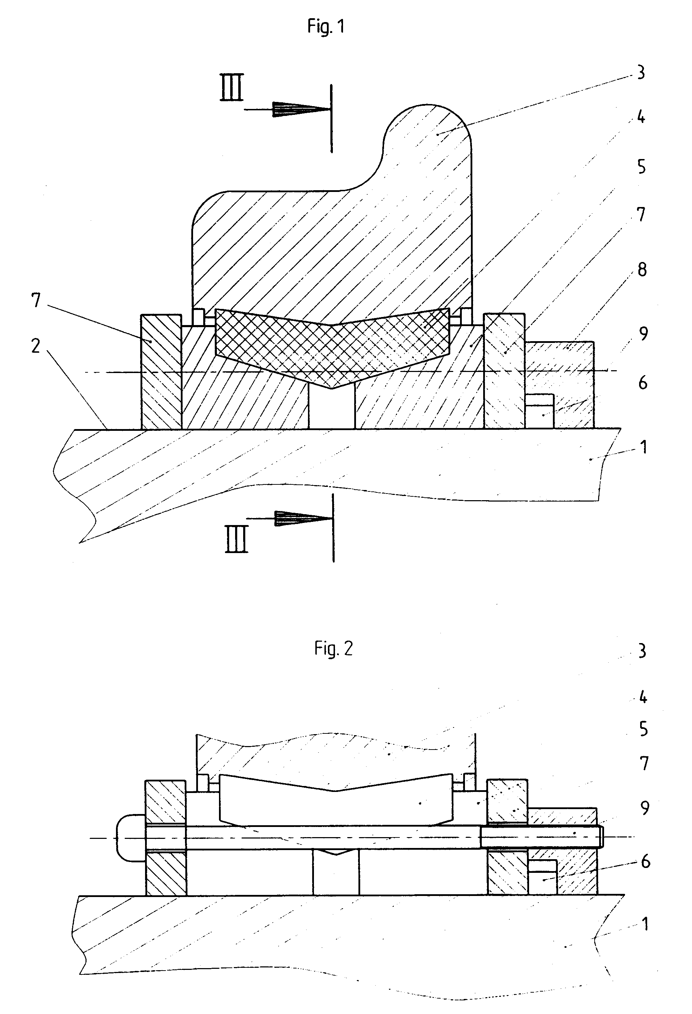

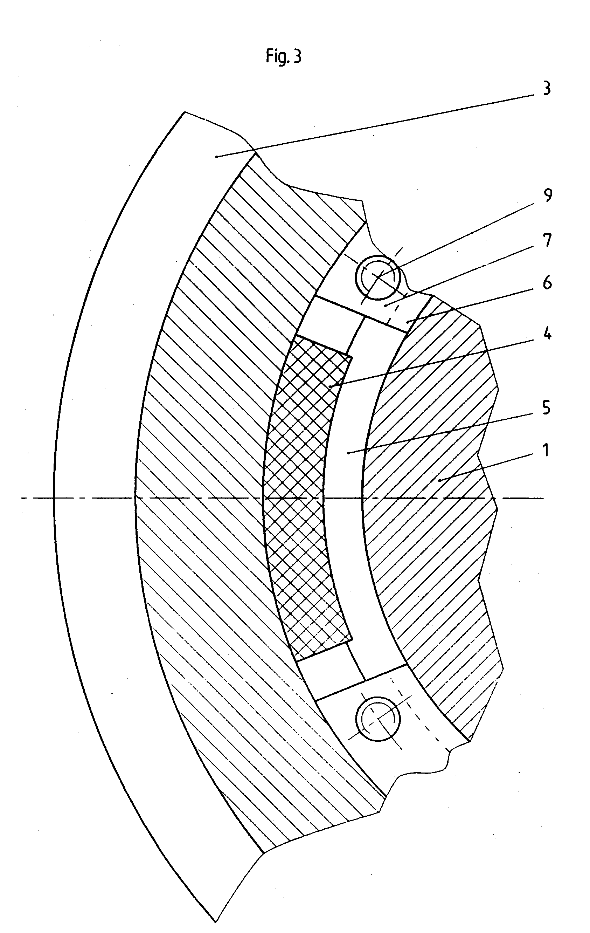

Es zeigen
- Fig 1: Den Teil eines Querschnitts durch ein Einzelrad gemäß der Erfindung
- Fig 2: Den Querschnitt nach Fig 1 mit der Befestigung des Radreifens
- Fig 3: Den Schnitt nach Linie III-III der Fig 1
- Fig 4: Den Querschnitt durch ein Einzelrad gemäß der Erfindung mit einem zweiten Ausführungsbeispiel der Erfindung
Wie in der Zeichnung dargestellt, trägt die aus Motor und Getriebe oder aus dem Motor bestehende Antriebseinheit 1 auf seiner zylindrischen Mantelfläche 2 den Radreifen 3. Der Radreifen 3 ist dabei unter Zwischenschaltung einer elastischen Zwischenlage 4 und einer isolierenden Zwischenlage 5 drehfest auf der Mantelfläche 2 der Antriebseinheit 1 gelagert. Bei dem in den Figuren 1 bis 3 dargestellten Ausführungsbeispiel der Erfindung besteht die isolierende Zwischenlage 5 aus 2 Ringen, die mit ihrer inneren Mantelfläche auf der Mantelfläche 2 der Antriebseinheit 1 und mit ihrer äußeren, teilweise keilförmig ausgebildeten Mantelfläche unter und seitlich gegen die elastische Zwischenlage 4 anliegen. Die elastische Zwischenlage 4, die entweder ringförmig oder sekmentförmig ausgebildet ist, liegt dabei mit ihrer äußeren Mantelfläche unter der inneren Mantelfläche des Radreifens 3 an. Die elastische Zwischenlage 4 kann dabei im Querschnitt rechteckig oder, wie in dem dargestellten Ausführungsbeispiel gezeigt, doppelt kegelförmig oder mit jedem anderen zweckmäßigen Querschnitt ausgebildet sein.

Auf der Mantelfläche 2 der Antriebseinheit 1 ist ein ringförmiger Steg 6 angeordnet, gegen den die isolierende Zwischenlage 5 und über diese die elastische Zwischenlage 4 und über diese der Radreifen 3 über seitlich an den isolierenden Zwischenlagen 5 angliegende Felgenringe 7 und einen Spannring 8 mittels Spannschrauben 9 verspannt und fixiert werden.

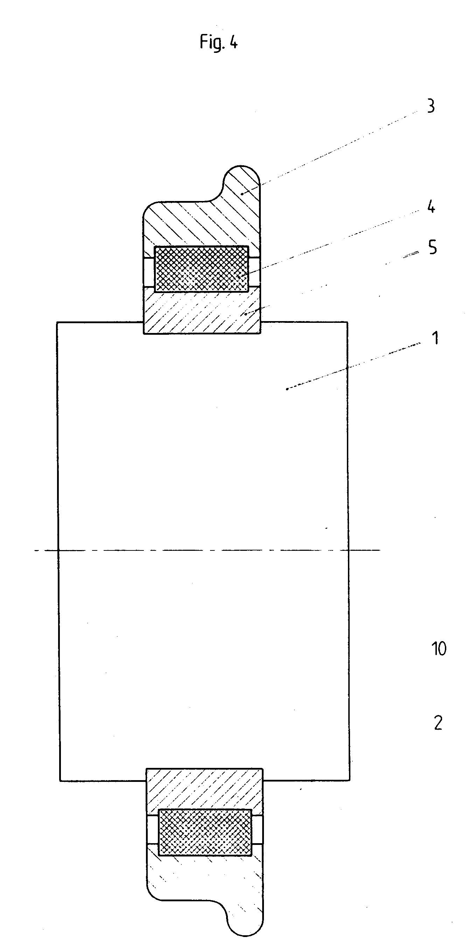

Bei dem in der Fig 4 dargestellten Ausführungsbeispiel der Erfindung ist die isolierende Zwischenlage 5 einteilig ausgeführt und drehfest in einer Nut 10 in der Mantelfläche 2 der Antriebseinheit 1 gelagert. Auf der äußeren Mantelfläche der isolierenden Zwischenlage 5 ist die hier im Querschnitt ebenfalls rechteckig ausgebildete elastische Zwischenlage 4 wiederum drehfest und auf der äußeren Mantelfläche der elastischen Zwischenlage 4 der Radreifen 3 mit seiner inneren Mantelfläche drehfest besfestigt.

Die elastische Zwischenlage 4 besteht zweckmäßig aus Naturkautschuk oder einer Naturkautschukverbindung und die isolierende Zwischenlage 5 aus einem Polymerwerkstoff. Bei Verbindung der isolierenden Zwischenlage 5 mit der Antriebseinheit 1, sowie die Verbindung der isolierenden Zwischenlage 5 mit der elastischen Zwischenlage 4 und der Verbindung der elastischen Zwischenlage 4 mit dem Radreifen 3 kann außer der vorstehend beschriebenen Verspannung durch Einpressen, Aufpressen, Verkleben oder einer anderen zweckmäßigen Verbindung druckfest und schubfest hergestellt werden.

## Patentansprüche

1. Einzelrad mit Radnabenmotor für Schienenfahrzeuge, wobei der Radnabenmotor entweder direkt oder unter Zwischenschaltung eines Getriebes das Einzelrad antreibt und die aus Motor und Getriebe oder dem Motor gebildete Antriebseinheit in das Einzelrad integriert ist, dadurch gekennzeichnet, daß der Radreifen (3) des Einzelrades direkt auf der Mantelfläche (2) der Antriebseinheit (1) unter Zwischenschaltung einer elastischen Zwischenlage (4) und einer thermisch isolierenden Zwischenlage (5) drehfest gelagert ist.

2. Einzelrad nach Anspruch 1, dadurch gekennzeichnet, daß die thermisch isolierende Zwischenlage (5) direkt auf dem Gehäuse der Antriebseinheit (1) angeordnet und dort form-, kraft- oder stoffschlüssig befestigt ist.

3. Einzelrad nach den Ansprüchen 1 und 2, dadurch gekennzeichnet, daß die thermisch isolierende Zwischenlage (5) direkt unter der elastischen Zwischenlage (4) angeordnet und mit dieser form- und kraftschlüssig verbunden ist.

4. Einzelrad nach den Ansprüchen 1 bis 3, dadurch gekennzeichnet, daß die thermisch isolierende Zwischenlage (5) ringförmig ausgebildet ist.

5. Einzelrad nach den Ansprüchen 1 bis 3, dadruch gekennzeichnet, daß die thermisch isolierende Zwischenlage (5) als in Querrichtung geteilter Ring ausgebildet ist, der seitlich gegen die elastische Zwischenlage (4) abgestützt ist.

6. Einzelrad nach den Ansprüchen 1 bis 3, dadurch gekennzeichnet, daß die thermisch isolierende Zwischenlage (5) und die elastische Zwischenlage (4) in Umfangsrichtung geteilt sind.

7. Einzelrad nach den Ansprüchen 1 bis 6, dadurch gekennzeichnet, daß die Zwischenlagen (4 und 5) über seitlich gegen diese anliegende Felgenringe (7) gegeneinander und über einen Steg (6) auf der Mantelfläche (2) der Antriebseinheit (1) gegen diese verspannt sind.

## Claims

1. Individual wheel with a wheel-hub motor for rail vehicles, the wheel-hub motor driving the individual wheel either directly or with the interposition of a gearbox and the drive unit formed by the motor and the gearbox or the motor being integrated into the individual wheel, characterized in that the wheel tyre (3) of the individual wheel is mounted in a rotationally fixed manner directly on the circumferential surface (2) of the drive unit (1) with the interposition of a resilient interlayer (4) and a thermally insulating interlayer (5).

2. Individual wheel according to Claim 1, characterized in that the thermally insulating interlayer (5) is arranged directly on the housing of the drive unit (1) and is secured there by positive, frictional or integral engagement.

3. Individual wheel according to Claims 1 and 2, characterized in that the thermally insulating interlayer (5) is arranged directly under the resilient interlayer (4) and is connected to the latter by positive and frictional engagement.

4. Individual wheel according to Claims 1 to 3, characterized in that the thermally insulating interlayer (5) is of annular design.

5. Individual wheel according to Claims 1 to 3, characterized in that the thermally insulating interlayer (5) is designed as a ring which is divided in the transverse direction and is supported laterally against the resilient interlayer (4).

6. Individual wheel according to Claims 1 to 3, characterized in that the thermally insulating interlayer (5) and the resilient interlayer (4) are divided in the circumferential direction.

7. Individual wheel according to Claims 1 to 6, characterized in that the interlayers (4 and 5) are clamped against one another by means of rim rings (7) resting laterally against them and are clamped against the drive unit (1) by way of a web (6) on the circumferential surface (2) of the said drive unit (1).

## Revendications

1. Roue indépendante à moteur de moyeu de roue pour véhicules ferroviaires, le moteur de moyeu de roue entraînant la roue indépendante soit directement soit par l'intermédiaire d'un réducteur et l'unité d'entraînement formée par le moteur et le réducteur ou par le moteur étant intégrée à la roue indépendante, caractérisée par le fait que le bandage (3) de la roue indépendante est monté solidaire en rotation directement sur la surface d'enveloppe (2) de l'unité d'entraînement (1) en passant par une couche intermédiaire (4) élastique et une couche intermédiaire (5) thermiquement isolante.

2. Roue indépendante suivant la revendication 1, caractérisée par le fait que la couche intermédiaire (5) thermiquement isolante est disposée directement sur le carter de l'unité d'entraînement (1) et est ici fixée par complémentarité de formes, par serrage ou par liaison par matière.

3. Roue indépendante suivant les revendications 1 et 2, caractérisée par le fait que la couche intermédiaire (5) thermiquement isolante est disposée directement sous la couche intermédiaire (4) élastique et est reliée à cette dernière par complémentarité de formes et par serrage.

4. Roue indépendante suivant les revendications 1 à 3, caractérisée par le fait que la couche intermédiaire (5) thermiquement isolante est réalisée sous une forme annulaire.

5. Roue indépendante suivant les revendications 1 à 3, caractérisée par le fait que la couche intermédiaire (5) thermiquement isolante est réalisée sous la forme d'un anneau divisé en direction transversale, appuyé latéralement contre la couche intermédiaire (4) élastique.

6. Roue indépendante suivant les revendications 1 à 3, caractérisée par le fait que la couche intermédiaire (5) thermiquement isolante et la couche intermédiaire (4) élastique sont divisées en direction circonférentielle.

7. Roue indépendante suivant les revendications 1 à 6, caractérisée par le fait que les couches intermédiaires (4 et 5) sont, par des cercles de jante (7) appliqués latéralement contre elles, bloquées l'une par rapport à l'autre et par l'intermédiaire d'un rebord (6) sur la surface d'enveloppe (2) de l'unité d'entraînement (1) bloquées par rapport à cette dernière.
